# EUROPÄISCHE PATENTSCHRIFT

(11) **EP 2 929 927 B1**
(45) Veröffentlichungstag und Bekanntmachung des Hinweises auf die Patenterteilung: **22.02.2017**
(21) Anmeldenummer: 15162547.2
(22) Anmeldetag: 07.04.2015
(51) Int. Cl.: B01D 53/86, H01B 13/06

(54) **VORRICHTUNG UND VERFAHREN ZUR HERSTELLUNG VON LACKDRÄHTEN MIT ANSCHLIESSENDER GASENTSTICKUNG**
DEVICE AND METHOD FOR PRODUCING ENAMELLED WIRES FOLLOWED BY GAS DENITRIFICATION
PROCÉDÉ ET DISPOSITIF DESTINÉS À LA FABRICATION DE FILS VERNIS SUIVI DE DÉNITRIFICATION DE GAZ

(30) Priorität: 07.04.2014 AT 502602014
(43) Veröffentlichungstag der Anmeldung: 14.10.2015
(73) Patentinhaber: P & F Maschinenbau GmbH, 3002 Purkersdorf (AT)
(72) Erfinder: Pascher, Gerald, 3002 Purkersdorf (AT)
(74) Vertreter: Sonn & Partner Patentanwälte

(56) Entgegenhaltungen:
- EP-A1- 1 935 506
- DE-A1- 2 927 794
- DE-A1- 3 741 328
- US-A- 3 106 386

## Beschreibung

Die Erfindung betrifft eine Vorrichtung zur Herstellung von Lackdrähten, mit einer Auftragsvorrichtung zum Auftragen zumindest einer Lackschicht, einem Ofen zum Verfestigen der Lackschicht und mit einer Abgasreinigungsvorrichtung zum Entfernen von Schadstoffen, insbesondere Stickoxiden, aus Abgasen des Ofens.

Weiters betrifft die Erfindung ein Verfahren zur Herstellung von Lackdrähten, wobei auf einen Metalldraht zumindest eine Lackschicht aufgetragen wird, welche in einem Ofen verfestigt wird, wobei die Abgase aus dem Ofen von Schadstoffen, insbesondere Stickoxiden, befreit werden.

Solche Anlagen zur Herstellung von Lackdrähten sind im Stand der Technik seit langem in Verwendung. Als Lackdrähte werden lackisolierte Metalldrähte, beispielsweise aus Kupfer oder Aluminium, verstanden. Aufgrund der Lackierung kann eine gute Isolation eines elektrischen Leiters gegen einen benachbarten Leiter oder den Träger von Wicklungen erreicht werden. Lackdrähte werden insbesondere zur Herstellung von elektrischen Wicklungen verwendet, die zur Stromleitung, Spannungsumwandlung, Feldaufbau und Feldablenkung dienen. Die im Stand der Technik bekannten Lacke bestehen im Wesentlichen aus filmbildenden Harzen und Lösungsmitteln.

Während der Trocknung der im flüssigen Zustand aufgebrachten Lackschichten werden Lacklösemittel bei hoher Temperatur ausgedampft, wodurch sich die Umluft der Lackdrahtanlage mit Lösemitteldampf sättigt. Bei diesem Prozess kann der Lösemittelstickstoff zu Stickstoffoxiden NOx, vorwiegend Stickstoffmonoxid NO und Stickstoffdioxid NO2, oxidiert werden.

Die DE3741328 offenbart eine Vorrichtung, und ein entsprechendes Verfahren, zur Herstellung von Lackdrähten, wobei eine Anlage zur thermischen Verbrennung/Oxidation von Lösemitteldämpfen aus Abgasen des Ofens vorhanden ist.

Die CN 203311930 U beschreibt einen Lackdrahtofen zur Trocknung und Härtung von lackierten Drähten. Das System weist in einem Prozessluft führenden Kanalbereich einen Katalysator auf, der als Oxidationskatalysator zur oxidativen Beseitigung von organischen Lacklösemitteln ausgebildet ist. Eine solche Vorrichtung wird in vielen Lackdrahtöfen eingesetzt, setzt jedoch nicht voraus, dass in der Ofenabluft verbleibende Restlösemittel in Form von flüchtigen organischen Komponenten (VOC) und Kohlenmonoxid (CO) vorhanden sind. Nachteiligerweise kann die bekannte Vorrichtung den Verbleib von Stickstoffoxiden (NOx) in der Ofenabluft nicht unterbinden. Eine Abgasnachbehandlungsanlage wird bei diesem Stand der Technik nicht eingesetzt.

Die CN 202210442 U beschreibt einen weiteren gattungsgemäßen Lackdrahtofen zur Trocknung und Härtung von lackierten Drähten. Das System weist ebenfalls einen Oxidationskatalysator zur oxidativen Beseitigung von organischen Lacklösemitteln in der Umluft bzw. Trocknungsluft auf. Im Abluftstrang des Ofens ist ein zweiter Katalysator positioniert, der als Nachverbrennungsoxidationskatalysator ausgebildet ist, um verbleibendes VOC und CO oxidativ abzureinigen. Eine solche Vorrichtung ist insbesondere in Zusammenhang mit der Abreinigung von organischen Restlösemitteln in Lackdrahtofenabluft bekannt.

Die Oxidationskatalysatoren des Standes der Technik - sowohl im Umluftprozess als auch im Abluftstrang des Ofens - sind nicht dazu in der Lage, die Stickstoffoxide (NOx) aus der Ofenabluft zu entfernen. Eine zusätzliche Abgasnachbehandlungsanlage wird bei diesem Stand der Technik nicht angeführt.

Demnach sind den CN 203311930 U und CN 202210442 U lediglich herkömmliche Vorrichtungen zur Trocknung und Härtung von lackierten Drähten entnehmbar, ohne jedoch eine Abgasreinigungsanlage anzugeben, mit welcher zugleich NOx, CO und VOC aus dem Abgas entfernt werden kann.

Im Stand der Technik wurde bisher keine vollends zufriedenstellende Lösung vorgeschlagen, wie die Schadstoffe, insbesondere die Stickstoffoxide, aus dem Abgasstrom des Drahtlackierofens entfernt werden können. Demnach wurde beispielsweise eine Ausführung in Erwägung gezogen, bei welcher das Temperaturniveau im Ofen abgesenkt wird. Damit kann jedoch nachteiligerweise nur eine unzureichende Umsatzrate erreicht werden. Andere Verfahren gehen hingegen mit einem hohen prozesstechnischen Aufwand einher.

Die CN 103301747 A offenbart eine andersartige Vorrichtung zur Entstickung von Rauchgasen mittels selektiver katalytischer Reduktion (SCR), wobei das Rauchgas von einem Pyrolyseofen stammt. Dabei wird in einem Harnstoffbehälter gelagerter fester Harnstoff mittels einer Dosierwaage einem Harnstofflösebehälter zugeführt, in dem der Harnstoff mit Wasser zu einer 40-50%igen Harnstofflösung gelöst wird. Die Harnstofflösung wird mittels Lanzen dem Pyrolyse-Ofen zugeführt, dem auf ca. 400-500°C erhitzte Luft zugeführt wird, worauf schließlich ein Ammoniak-Luft-Gemisch vom Pyrolyse-Ofen weiter zu einem SCR-Reaktor strömt, in welchem die Entstickungsreaktion durchgeführt wird.

Demnach handelt es sich bei diesem Stand der Technik um eine großvolumige verfahrenstechnische Abgasentstickungsanlage, welche mit NOx beladene Abluft mittels eines SCR-Verfahrens reinigen kann. Für das SCR-Reinigungssystem wird eine 40-50%-ige wässrige Harnstofflösung als Reduktionsmittel verwendet, welche über die Pumpe in den Mischer eingeleitet wird, in welchem die Harnstofflösung mit erwärmter bzw. getrockneter Druckluft vermengt wird. Das Gemisch wird anschließend über Eindüsungslanzen in einen Pyrolyseofen eingedüst und dort auf 400-500°C erwärmt. Die Erwärmung erfolgt durch die Eindüsung von heißer Prozessluft aus einem anderen Prozesssystem mit einer Primärtemperatur von 350-400°C, welche noch vor dem Eintrag in den Pyrolyseofen auf 600°C erhitzt wird. Die Herstellung von reaktivem Ammoniak erfolgt im Ofen durch Verdampfung, Hydrolyse bzw. Thermolyse der eingedüsten wässrigen Harnstofflösung. Die SCR-Reaktionen zur Entstickung des Abgases erfolgen erst im separaten, neben dem Ofen positionierten Reaktor, in dem das dampfförmige NH3-NOx-Luft-Gemisch über die Leitung zugeleitet und mittels den Düsen eingedüst wird. Dort reagiert das Gemisch in SCR-Katalysatoren.

Die CN 203408631 U offenbart eine weitere gattungsfremde Vorrichtung zur Entstickung von Rauchgas mittels selektiver katalytischer Reduktion (SCR), wobei das Rauchgas ein Abfallprodukt eines chemischen Prozesses ist. Das Rauchgas wird in einem Mischer mit einem Heißgas von einem Gasofen vermischt, woraufhin das Rauchgas über einen Wärmetauscher dem Gasofen zugeführt wird. In die Brennkammer wird weiters eine Harnstofflösung eingedüst. Die Abgase des Gasofens werden einem SCR-Reaktor zugeführt, in welchem die Entstickung stattfindet. Schließlich wird das gereinigte Abgas über den Wärmetauscher einem Kamin zugeführt. Der SCR-Reaktor weist drei wabenförmige Katalysatorschichten auf, welche aus Vanadiumpentoxid V2O5, Molybdänoxid MoO3, Wolframtrioxid WO3 und Titandioxid TiO2 bestehen.

Demnach handelt es sich bei diesem Stand der Technik ebenfalls um eine großvolumige verfahrenstechnische Abgasentstickungsanlage, um mit NOx beladene Abluft aus andersartigen chemischen Prozessen mittels eines SCR-Verfahrens zu reinigen. Das zu reinigende Abgas stammt aus einem externen Prozess, bei dem Salpetersäure mit organischen Stoffen reagiert. Für das SCR-Reinigungssystem wird eine wässrige Harnstofflösung als Reduktionsmittel verwendet. Danach wird die Harnstofflösung zusammen mit Druckluft in die Brennkammer eingedüst. Dort wird das Ammoniak-Luft-Wasser-Gemisch mit der NOx beladenen Abluft mit einer Temperatur von 110-150°C vermengt und mittels einer Erdgasflamme auf ca. 500-600°C erhitzt. Das erhitzte Gasgemisch wird dann mit einer Temperatur von ca. 160-250°C in den SCR-Reaktor eingeleitet. Dort befinden sich drei SCR-Katalysatoren auf Basis von Vanadiumpentoxid-, Molybdänoxid- und Titandioxidbeschichtungen, welche in Serie geschaltet sind. Das zu entstickende Abgas wird gereinigt und anschließend in den Wärmeübertrager geführt, wo dieses das noch mit NOx beladene Abgas zur Energierückgewinnung von 70-80°C auf 110-150°C vorwärmt. Das vorgewärmte Gas wird dann wie bereits oben beschrieben in die Brennkammer eingeleitet. Das reine und abgekühlte Gas tritt über den Schornstein in die Umgebung aus. Das primäre NOx-Abgas wird durch Mischung mit einem Teil des Gasstromes über die Pumpe von 20-40°C auf 70-80°C erwärmt.

Demnach sind dem Stand der Technik Abgasreinigungsanlagen mit SCR-Modulen lediglich bei abliegenden Anwendungsgebieten entnehmbar, welche jedoch nicht bei den gattungsgemäßen Drahtlackiereinrichtungen und deren Abgasströmen zum Einsatz gebracht werden können.

Die CN 103301747 A und CN 203408631 U stellen groß angelegte verfahrenstechnische Abgasentstickungsanlagen dar, welche zwar die Reinigung von mit NOx beladener Abluft mittels eines SCR-Verfahrens ermöglichen, aber für Lackdrahtanlagen aus den nachfolgenden Gründen nicht eingesetzt werden könnten:
Die bekannten Anlagen sind vergleichsweise groß und wären schon aus Platzgründen nicht in Abluftrohren direkt am Abluftaustritt von Lackdrahtmaschinenöfen installierbar. Weiters wäre der Kostenaufwand solcher Systeme bei Drahtlackieranlagen unwirtschaftlich.

Weiters verfügen die bekannten Anlagen über zahlreiche Anlagenkomponenten zur Herstellung von Harnstofflösung (d.h. zum Fördern, Mischen, Pumpen, Rühren, Lagern, etc.) und zur Wärmevorbehandlung des Reduktionsmittels (mit Wärmeübertragern, Mischern etc.), welche für einen Einsatz bei Lackdrahtmaschinen weder erforderlich noch gewünscht wären.

Den bekannten Anlagen mangelt es an der erforderlichen Kompaktheit, da diese getrennte Systeme zur Aufbereitung von reaktivem Ammoniak und zur Abwicklung der SCR-Reaktionen aufweisen.

Weiters werden bei den bekannten Anlagen keine Regelungssysteme beschrieben, welche für Drahtlackieranlagen geeignet wären. Dadurch würde der Fachmann davon abgehalten, diesen Stand der Technik bei gattungsgemäßen Drahtlackiervorrichtungen einzusetzen.

Weiters fehlt eine Möglichkeit, austretenden Ammoniak zu eliminieren. Bei einem Drahtlackierwerk mit vielen Linien würde dies zu einer unzumutbaren Geruchsbelästigung durch austretendes Ammoniak führen. Dies wäre überdies aus umwelttechnischen Gründen nicht tragbar.

Demnach besteht die Aufgabe der vorliegenden Erfindung darin, eine Vorrichtung und ein Verfahren der eingangs angeführten Art zu schaffen, mit welcher bzw. mit welchem die Nachteile des Standes der Technik gelindert bzw. eliminiert werden. Die Erfindung setzt sich daher insbesondere zum Ziel, die Schadstoffe aus den Ofenabgasen der Drahtlackiervorrichtung mit hohen Umsatzraten und geringem prozesstechnischen Aufwand zu entfernen.

Diese Aufgabe wird durch eine Vorrichtung mit den Merkmalen von Anspruch 1 und ein Verfahren mit den Merkmalen von Anspruch 13 gelöst.

Erfindungsgemäß weist die Abgasreinigungsvorrichtung eine Anlage zur selektiven katalytischen Reduktion von Stickoxiden in den Abgasen des Ofens auf.

Bei umfangreichen Tests hat sich überraschenderweise gezeigt, dass die Entstickung der Abgase aus dem (Umluft-)Ofen der Drahtlackieranlage mit geringem Aufwand und hohen Umsatzraten dadurch bewerkstelligt werden kann, dass der Ofen mit einer Anlage zur selektiven katalytischen Reduktion (SCR) der Abgase verbunden wird. Dadurch kann vorteilhafterweise eine zuverlässige Umsetzung der Stickoxide aus den Ofenabgasen erreicht werden, wobei die gereinigten Abgase den geltenden Vorschriften bei solchen Drahtlackieranlagen entsprechen. Die SCR-Anlage hat sich aufgrund der Zusammensetzung der Schadstoffe in den Ofenabgasen überraschend als besonders wirksame Abreinigungsvorrichtung herausgestellt, welche den im Stand der Technik vorgeschlagenen und bei Drahtlackieranlagen naheliegenden Maßnahmen, wie die Absenkung des Temperaturniveaus in dem Ofen oder die Verwendung von Gaswäschern, überlegen ist. Mit der erfindungsgemäßen Abreinigungsvorrichtung konnten Umsatzraten der Reduktion von NO und NO₂ von 95 bis 98 % erreicht werden.

Die Anlage zur katalytischen selektiven Reduktion weist bevorzugt zumindest einen Entstickungskatalysator mit einem katalytisch wirksamen Metalloxid, insbesondere Titandioxid und/oder Wolframtrioxid und/oder Vanadiumpentoxid, auf, wobei bevorzugt zumindest zwei, insbesondere genau drei, Entstickungskatalysatoren in Strömungsrichtung der Abgase hintereinander vorgesehen sind.

Zur Umsetzung von Kohlenmonoxid (CO) oder Kohlenwasserstoffen (HC) in den Abgasen des Ofens ist es günstig, wenn die Abgasreinigungsvorrichtung, insbesondere in Strömungsrichtung der Abgase nach dem zumindest einen Entstickungskatalysator, einen Oxidationskatalysator zum Abbau von Kohlenmonoxid und/oder Kohlenwasserstoffen und/oder Ammoniak aufweist, welcher vorzugsweise eine Platin- und/oder Palladium-Beschichtung als katalytisch wirksames Material aufweist. Aufgrund der Zusammensetzung der Ofenabgase kann bei einer bevorzugten Ausführung auf eine Voroxidation vor der Entstickung verzichtet werden.

Zum chemischen Abbau der Stickoxide in den Abgasen des Ofens ist es von Vorteil, wenn eine Zufuhreinrichtung zum Zuführen eines Reduktionsmittels, insbesondere von Ammoniak oder einer Ammoniak abgebenden Verbindung, vorzugsweise Harnstofflösung, in die Abgase des Ofens vorgesehen ist.

Bei den gattungsgemäßen Drahtlackiervorrichtungen hat sich überraschend herausgestellt, dass die Verwendung einer 32,5%-igen Harnstofflösung (auch als "AdBlue" bekannt) besondere Vorteile bringt. Diese Harnstofflösung kann direkt als reine Harnstoffschmelze aus dem Produktionsprozess heraus gewonnen und ohne Umwege in demineralisiertem Wasser auf die spezifizierte Konzentration gebracht werden. Demnach können die für die Herstellung solcher Harnstofflösungen erforderlichen Komponenten, die beim Stand der Technik eingesetzt wurden, weggelassen werden. Diese wären auch aus sicherheitstechnischen Aspekten nicht erstrebenswert. Das SCR-System, insbesondere Leitungen, Ventile, Pumpen, Düsen, Lanzen, Katalysatoren, etc., ist sehr empfindlich gegenüber geringen chemischen Verunreinigungen in der verwendeten Harnstofflösung. Selbst kleine Mengen von Fremdstoffen können großen Schäden an der Wirksamkeit des Katalysators zur Folge haben. Komponenten zur Herstellung einer solchen Harnstofflösung für Lackdrahtanlagen würden daher weder technisch zielführend und finanzierbar sein, noch würde dafür bei Drahtlackieranlagen Platz zur Verfügung stehen.

Zudem ist die "AdBlue"-Harnstofflösung eine sogenannte eutektische Lösung, wodurch der Gefrierpunkt mit -11°C sehr niedrig liegt.

Die Zersetzungstemperatur von AdBlue liegt bei +60°C. Bei richtiger Handhabung (hinsichtlich Lagerung, Temperaturen, Spülung, etc.) dieser Harnstofflösung in Lackdrahtwerken sind demnach keine Kristallisationsprodukte bzw. feste Zersetzungsrückstände zu erwarten, welche zu Ablagerungen in Abluftrohren von Lackdrahtöfen führen können. Die Verwendung von höherprozentigen Harnstofflösungen, so wie die beim eingangs diskutierten Stand der Technik verwendeten 40-50%-igen Lösungen, würden im Vergleich dazu verschiedenste Nachteile mit sich bringen. Einerseits würde sich die Viskosität der höherprozentigen Lösung nachteilig auf die Förderung in Pumpen, Leitungen und auch die Eindüsung auswirken. Hinzu könnte gemäß dem oben angeführten Phasendiagramm bereits bei Raumtemperatur fester Harnstoff aus der Lösung ausfallen, was bei der Anwendung für Lackdrahtanlagen nicht akzeptabel wäre. Zur gleichmäßigen Einbringung des Reduktionsmittels in den Abgasstrom ist bevorzugt vorgesehen, dass die Zufuhreinrichtung eine Zerstäubungsdüse zum Einsprühen des Reduktionsmittels, insbesondere in Form der Harnstofflösung, in die Abgase des Ofens aufweist.

Damit eine möglichst geringe Menge des Reduktionsmittels in den gereinigten, insbesondere entstickten, Abgasen verbleibt, ist es von Vorteil, wenn die Zufuhreinrichtung mit einer Steuer- bzw. Regeleinrichtung zum Steuern bzw. Regeln des in die Abgase des Ofens eingebrachten Reduktionsmittels, insbesondere in Form der Harnstofflösung, verbunden ist.

Zur Überwachung der erzielten Umsatzrate ist es günstig, wenn ein Sensor zur Messung des Gehalts von Stickoxiden in den Abgasen vorgesehen ist.

Bei dieser Ausführung ist es günstig, wenn der Sensor zur Messung des Gehalts von Stickoxiden in Strömungsrichtung der Abgase gesehen nach der Anlage zur selektiven katalytischen Reduktion vorgesehen ist. In manchen Anwendungen kann jedoch zusätzlich oder alternativ ein Sensor vor der SCR-Anlage vorgesehen sein.

Um den Ablauf der chemischen Prozesse in der erfindungsgemäßen Abgasreinigungsvorrichtung laufend anpassen zu können, ist es vorteilhaft, wenn der Sensor zur Messung des Gehalts von Stickoxiden mit der Regeleinrichtung zum Regeln des in die Abgase des Ofens eingebrachten Reduktionsmittels, insbesondere in Form der Harnstofflösung, verbunden ist.

Vorteilhafterweise kann die Abgasreinigungsvorrichtung in die Steuerung der Gesamtanlage einbezogen werden, wenn die Regeleinrichtung zum Regeln des in die Abgase des Ofens eingebrachten Reduktionsmittels mit einer Steuerung für die Auftragsvorrichtung zum Auftragen der Lackschicht und für den Ofen verbunden ist. Die Steuerung ist mit den anderen Komponenten der Lackdrahtanlage verbunden und kann beispielsweise als Speicherprogrammierbare Steuerung (SPS) ausgeführt sein.

Um das Reduktionsmittel möglichst gleichmäßig in den Abgasen des Ofens zu verteilen, ist es von Vorteil, wenn die Anlage zur selektiven katalytischen Reduktion eine Mischeinrichtung zum Vermischen des Reduktionsmittels mit den Abgasen aus dem Ofen aufweist.

Bei dieser Ausführung ist es insbesondere günstig, wenn die Mischeinrichtung ein vorzugsweise stationäres Drallerzeugungselement aufweist. Mit Hilfe des Drallerzeugungselements können die Abgase in Richtung senkrecht zur Hauptströmungsrichtung abgelenkt werden, wodurch eine bessere Durchmischung mit dem Reduktionsmittel stattfindet.

Zur Erzielung einer kompakten Bauweise ist es von Vorteil, wenn die Anlage zur selektiven katalytischen Reduktion ein rohrförmiges Gehäuse aufweist, welches bevorzugt horizontal, insbesondere oberhalb des Ofens, angeordnet ist.

Bei einer bevorzugten Ausführung weist das Gehäuse eine außenseitige Isolierung aus einem wärmedämmenden Material auf. Vorteilhafterweise können so Wärmeverluste reduziert werden.

Zudem ist es vorteilhaft, wenn die Mischeinrichtung in einem ersten Abschnitt des rohrförmigen Gehäuses mit einem vergleichsweise kleinen Durchmesser und der zumindest eine Entstickungskatalysator in einem zweiten Abschnitt des rohrförmigen Gehäuses mit einem vergleichsweise großen Durchmesser vorgesehen ist. Demnach ist die Mischeinrichtung in einem ersten rohrförmigen Gehäuseabschnitt vorgesehen, welches einen geringeren Durchmesser als ein zweiter rohrförmiger Gehäuseabschnitt zur Aufnahme der Entstickungs- bzw. Oxidationskatalysatoren aufweist.

Im Hinblick auf eine kompakte, stabile Bauweise der Abgasreinigungsvorrichtung ist es günstig, wenn in dem rohrförmigen Gehäuse der Anlage zur selektiven katalytischen Reduktion zumindest ein zylinderförmiger Entstickungskatalysator und/oder ein zylinderförmiger Oxidationskatalysator vorgesehen ist. Alternativ kann die SCR-Anlage ein im Querschnitt rechteckiges Gehäuse aufweisen, in welchem zumindest ein im Querschnitt rechteckiger Entstickungskatalysator und/oder ein im Querschnitt rechteckiger Oxidationskatalysator angeordnet ist bzw. sind.

Bei dem erfindungsgemäßen Verfahren ist es günstig, wenn die Abgase mit einer Temperatur zwischen 200 und 600° Celsius, insbesondere zwischen 250 und 600° Celsius, vorzugsweise zwischen 250 und 480° Celsius, aus dem Ofen abgeleitet und danach der selektiven katalytischen Reduktion unterzogen werden. Darüber hinaus ist es vorteilhaft, wenn die aus dem Ofen abgeleiteten Abgase ohne vorherige Erwärmung der selektiven katalytischen Reduktion unterzogen werden. Bei dieser Ausführung kann die Anlage zur selektiven katalytischen Reduktion im Wesentlichen unmittelbar an einem Abluftaustritt des Ofens angeordnet sein. Die Abgase verlassen den Ofen mit einer Temperatur zwischen 200° Celsius und 600° Celsius. Je nach Ausführung des Ofens beträgt die Temperatur der Abgase insbesondere zwischen 250° Celsius und 600° Celsius, vorzugsweise zwischen 250° Celsius und 480° Celsius. Bei dieser Ausführung weisen die Abgase daher die für die Thermolyse bzw. Hydrolyse von Harnstoff erforderliche Mindesttemperatur von ca. 220° Celsius auf. Vorteilhafterweise liegen diese Abgastemperaturen im Betriebsbereich der vorstehend erläuterten Entstickungskatalysatoren, so dass die Abgase aus dem Ofen direkt, d.h. ohne vorangehende Erwärmung der Abgase, in die Anlage zur selektiven katalytischen Reduktion eingeleitet werden können. Somit kann auf die Anordnung eines Wärmetauschers zwischen dem Ofen und der SCR-Anlage zur Aufheizung der Abgase auf die Betriebstemperatur des Entstickungskatalysators verzichtet werden. Dadurch kann der Energieaufwand beim Betrieb der Abgasreinigungsvorrichtung reduziert werden.

Die Erfindung wird nachstehend anhand von in den Figuren dargestellten Ausführungsbeispielen, auf die sie jedoch nicht beschränkt sein soll, weiter erläutert. Im Einzelnen zeigen in der Zeichnung:
Fig. 1 schematisch eine Vorrichtung zur Herstellung von Lackdrähten mit einer Auftragsvorrichtung zum Auftragen zumindest einer Lackschicht auf einen Metalldraht, einem Ofen zum Verfestigen der Lackschicht auf dem Metalldraht und mit einer Abgasreinigungsvorrichtung zum Entfernen von Schadstoffen aus den Ofenabgasen;
Fig. 2 ein Schema der Abgasreinigungsvorrichtung für die Vorrichtung gemäß Fig. 1, welche erfindungsgemäß eine Anlage zur selektiven katalytischen Reduktion von Stickoxiden in den Ofenabgasen aufweist;
Fig. 3 eine schaubildliche Ansicht einer bevorzugten Ausführungsform der erfindungsgemäßen Vorrichtung zur Herstellung von Lackdrähten;
Fig. 4 eine teilweise geschnittene Ansicht der Abgasreinigungsvorrichtung für die Vorrichtung gemäß Fig. 3;
Fig. 5 eine Detailansicht der Abgasreinigungsvorrichtung gemäß Fig. 4, wobei eine Zufuhreinrichtung zur Zufuhr eines Reduktionsmittels in den Abgasstrom des Ofens ersichtlich ist;
Fig. 6 eine weitere Detailansicht der Abgasreinigungsvorrichtung gemäß Fig. 4, wobei eine Mischeinrichtung zum Vermischen des Reduktionsmittels mit den Ofenabgasen ersichtlich ist.

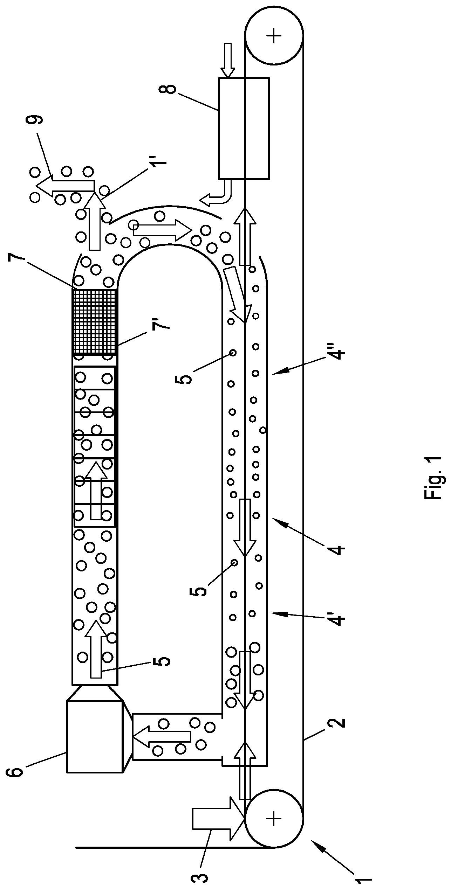

Fig. 1 zeigt eine Vorrichtung 1 zur Herstellung von Lackdrähten 2. Die Vorrichtung 1 weist eine Auftragsvorrichtung 3 zum Auftragen mehrerer Lackschichten auf einen Metalldraht auf. Zudem ist ein Ofen 4 zum Trocknen und Aushärten der Lackschichten auf dem Metalldraht vorgesehen. Der Ofen 4 weist eine Trocknungszone 4' und eine Aushärtzone 4" auf. Im Ofen 4 wird Umluft 5 mittels eines Ventilators 6 im Kreis geführt. Die Umluft 5 wird, wie nachstehend im Detail erläutert wird, mit verschiedenen Schadstoffen angereichert. Zudem ist eine Abgasreinigungsvorrichtung 7 zum Entfernen der Schadstoffe, insbesondere von Stickoxiden, aus den Abgasen des Ofens vorgesehen, welche gemäß Fig. 1 einen Umluft-Oxidationskatalysator 7' aufweist. Weiters ist in Fig. 1 ein Kühler 8 zum Abkühlen des Lackdrahtes ersichtlich.

Die Drahtisolierung wird durch die Trocknung und Härtung von den auf den Draht aufgebrachten flüssigen Lackschichten in dem Umluftofen 4 bei ca. 550 - 700°C hergestellt. Da der Auftrag der erforderlichen Endbeschichtungsdicke in mehreren Durchgängen erfolgen muss, werden bis zu 24 Deckungen desselben Drahtes durch den Trocknungs- bzw. Härtungsofen geführt. Während der Trocknung der flüssigen Lackschichten auf dem Metalldraht werden Lacklösemittel bei hoher Temperatur ausgedampft, wodurch sich die Umluft der Lackdrahtanlage längs der Trocknungszone kontinuierlich mit Lösemitteldampf sättigt.

Die mit Lösemittel beladene Luft durchströmt während des Umluftbetriebs ständig einen Palladium-Platin-Katalysator, welcher als Umluftoxidationskatalysator 7' dient, wodurch die Kohlenwasserstoffe (CmHn = Lösemitteldampf) mit dem Sauerstoff O₂ der in den Ofen eingesaugten Frischluft exotherm zu Kohlendioxid CO₂ und Wasserdampf H₂O oxidiert werden. Während dieser exothermen chemischen Reaktion wird daher thermische Energie frei, welche die Prozessluft beheizt. Allerdings kann dort verstärkt auch der Lösemittelstickstoff zu Stickstoffoxiden NOx (vorwiegend Stickstoffmonoxid NO, Stickstoffdioxid NO₂) oxidiert werden. Die Umsatzrate im Umluft-Oxidationskatalysator 7' steigt grundsätzlich mit steigendem Temperaturniveau an. In Bereichen außerhalb des Katalysators kann das Lösemittel-Luft-Gemisch aufgrund des ausreichend hohen Temperaturniveaus (z.B. Trocknungszone, Heizzone) bereits vorzeitig chemisch reagieren.

Die eingebrachten Massenströme an Luft und Lösemittel in das System sind während der Produktion annähernd konstant. Prozessbedingt wird direkt nach dem Umluftkatalysator heiße Abluft 9 abgesaugt und in die Umgebung ausgetragen. Der Austrag der Abluft erfolgt über ein Stahlrohr mit einem Innendurchmesser von 80 mm mittels eines Radialgebläses. Direkt am Rohrausgang ist meist ein vertikal ausgerichteter Gegenstromwärmeüberträger 23 angeflanscht, welcher mit der thermischen Energie der Abluft Wasserdampf als Schutz- und Reinigungsgas für den Glühprozess des Rohdrahtes erzeugt. Im Standardbetrieb liegt die Ablufttemperatur vor dem Verdampfer zwischen 300 - 500°C und nach dem Verdampfer bei etwa 250 - 280°C.

Relevante Schadstoffkomponenten in der Anlagenabluft während des Lackierprozesses sind Kohlenmonoxid CO, verbleibende flüchtige organische Stoffe (Kohlenwasserstoffe angegeben als gesamt gebundener Kohlenstoff bzw. Gesamt-C) und Stickstoffoxide NOx. CO entsteht durch die unvollständige Verbrennung der Kohlenwasserstoffe. Verbleibende Restmengen an Kohlenwasserstoffen in der Ofenabluft sind darauf zurückzuführen, dass die vorhandenen Lösemitteldämpfe im Umluftprozess speziell im Umluftkatalysator 7' unzureichend oxidiert werden. Dies kann z.B. durch eine Überbeladung der Prozessluft mit Kohlenwasserstoffen (d.h. bei zu hohem Lösemitteleintrag in das System), ein unzureichendes Temperaturniveau im Umluftkatalysator oder auch durch zu wenig reaktiven Sauerstoff (Frischluftzufuhr bzw. Abluftmenge) im System bedingt sein.

NOx in Lackdrahtmaschinen ist sogenanntes Brennstoff-NOx und kein thermisches NOx. Die Entstehung von NOx beruht damit im Lackierprozess maßgeblich auf der chemischen Umsetzung der im Brennstoff (Lacklösemittel) gebundenen Anteile an Stickstoff mit Luftsauerstoff. Thermisches NOx würde aus dem Stickstoff der Luft bei über 1000°C entstehen. Dennoch fördern erfahrungsgemäß höhere Temperaturen die chemische Umsetzungsrate von N₂ zu NOx (speziell im Umluftkatalysator). Ein Hauptverursacher von NOx bei der Drahtbeschichtung ist das Lösungsmittel NMP (N-Methyl-2-pyrrolidon), welches Basislösungsmittel des oft verwendeten Polyamidimidlacks (PAI) als Overcoat ist. NMP enthält hohe Mengen an Stickstoff, welcher im Ofenprozess speziell in temperaturhohen Bereichen (z.B. Heizzone, Umluftkatalysator) zu NOx oxidiert wird.

Bei Horizontalanlagen zur Lackierung von Runddrähten mit Durchmessern bis 1,2 mm liegen Abluftmengen von ca. 65 - 70 Nm3/h vor. In der Abluft befinden sich wie oben erwähnt verbleibende Mengen an Stickstoffmonoxid NO, Stickstoffdioxid NO₂, Kohlenmonoxid CO und verbleibende Restlösemittelanteile in Form von unverbrannten Kohlenwasserstoffen CnHm, welche aktiv abgereinigt werden sollen. Die Schadstoffgrenzwerte für industrielle Abluft werden durch verschiedenste gesetzliche Normen festgelegt.

Die Schadstoffmengen an CO und CmHn können einerseits durch eine Effizienzsteigerung des Umluftkatalysators 7' (Oxidationskatalysator) im Einbrennofen erzielt werden, anderseits durch einen im Abluftrohr zusätzlich implementierten Nachverbrennungskatalysator (Oxidationskatalysator) gänzlich abgebaut werden. Die NOx-Schadstoffmengen können hingegen durch einen Oxidationskatalysator nicht abgebaut werden. Primär können diese im Ofenabgas einerseits durch die Wahl stickstoffarmer Lacklösemittel, oder sekundär durch eine Abgasnachbehandlung reduziert werden.

Bei der Umsetzung der vorliegenden Erfindung wurden verschiedenste Ansätze zum Entfernen der Stickoxide aus den Ofenabgasen erwogen, welche aufgrund der besonderen Verhältnisse bei Drahtlackiervorrichtungen verworfen werden mussten.

### a) Senkung des Temperaturniveaus im Ofen

Ein niedriges Temperaturniveau im Ofen würde die Produktion von NOx mindern, da die Umsatzrate von Lösemittelstickstoff N₂ zu NOx mit Luftsauerstoff mit zunehmender Temperatur steigt. Damit wären allerdings zwangsweise auch niedrige Einbrennzonentemperaturen verbunden, wodurch die Produktivität sinken würde. Gelänge es, speziell nur die Umluftkatalysatortemperaturen zu senken, könnte die NOx-Bildung massiv unterdrückt werden, da dort die höchsten Oxidationsraten vorliegen. Grundsätzlich sinkt jedoch bei niedriger Katalysatortemperatur die Umsatzrate der Oxidation, wodurch im Abgas wiederum höhere Restlösemittelanteile und Konzentrationen an Kohlenmonoxid zu erwarten wären. Außerdem würde die Umluft auch höhere Lösemittelkonzentrationen aufweisen, was sich dann negativ auf den Trocknungsprozess des lackbeschichteten Drahtes auswirken würde. Selbst ein optimierter Katalysator, welcher bei geringeren Temperaturen gleichbleibende Effizienz aufweist, wäre keine zielführende Lösung. Dieser würde bei geringerem Temperaturniveau dieselbe Menge an Lösemittelstickstoff zu Stickstoffoxiden umwandeln.

### b) NOx-Speicherkatalysator

Speicherkatalysatoren sind weltweit erprobt und werden zumeist in abliegenden Gebieten, wie Kraftfahrzeugen mit Dieselmotoren, zur Reduktion von NOx eingesetzt. Das Katalysatorträgermaterial besteht aus Platin und einer NOx-Speichersubstanz, zumeist Bariumoxid BaO. Bei sauerstoffreicher Abluft wird NOx mit der Bariumspeichersubstanz zu Bariumnitrat Ba(NO₃)₂ - einem Salz - aufoxidiert und im Katalysator absorbiert bzw. gespeichert. Das zulässige Temperaturintervall zum Speichern liegt zwischen 300 und 500°C. Dadurch wird aus dem Abgas NOx entfernt. Nach einer bestimmten Zeit sind diese Speicherzellen mit dem Salz überladen und müssen regeneriert werden. Im Dieselmotor wird dazu für nur etwa zwei Sekunden lang von einem mageren (d.h. sauerstoffreichen) Gemisch auf ein fettes (d.h. sauerstoffarmes) Gemisch regelungstechnisch umgeschalten. Ist wenig Sauerstoff vorhanden, steigt im KFZ-Abgas der Anteil an unvollständig verbrannten Kohlenwasserstoffen CmHn und Kohlenmonoxid CO. Nun reagieren CmHn und CO mit dem Sauerstoff des gespeicherten Bariumnitrat-Salzes im KAT. Übrig bleibt im Abgas elementarer Stickstoff N₂ und Kohlendioxid CO₂ bzw. Wasserdampf H₂O. Im Katalysator verbleibt wiederum speicherfähiges Bariumoxid. Im Dieselmotor wird danach sofort wieder auf ein mageres Gemisch rückgeschalten, worauf der Speichervorgang von NOx wieder von Neuem beginnt.

Könnte man demnach einen solchen Speicher-Katalysator in die Abgasleitung eines Lackdrahtofens implementieren, würde sich im Katalysator das NOx des Abgases absorbieren lassen. Zum Entleeren des Speichers müsste man dann aber für kurze Zeit die Möglichkeit haben, den Sauerstoffgehalt der Abluft massiv zu reduzieren, um den NOx-beladenen Katalysator regenerieren zu können. Hierbei stellt sich das Problem, dass bei Lackdrahtanlagen die "Fettigkeit" des Brennstoff-Luft-Gemisches nicht geregelt werden kann, da einerseits die Drahtdeckungen mit konstanter Geschwindigkeit und gleichbleibenden Lackfilmdicken durch den Ofen laufen und andererseits die Einsaugmengen an Frischluft über die Ofenöffnungen nahezu unverändert bleiben.

### c) Absorptionsverfahren (Gaswäsche)

Von Absorption spricht man auch, wenn ein Gas durch eine Waschflüssigkeit geleitet und dies sozusagen "ausgewaschen" wird. Die zu absorbierenden Gaskomponenten - im vorliegenden Fall NOx - werden dann molekular in der Waschflüssigkeit gebunden. Sind die Komponenten wasserlöslich, verwendet man als Waschflüssigkeit Wasser H2O. Wenn nicht, müssen andere chemische Substanzen beigemengt werden (Chemiesorption). Nachteile dieses Verfahrens wären jedoch die Befeuchtung der Ofenabluft 1' mit Gefahr der Kondensation, Beeinflussung des Druckniveaus im Abluftrohr, eventuell Druckaufbau durch Wasserdampfbildung, benötigte Dichtheit des Systems und der erforderliche Abtransport der thermischen Energie (Wärme) im Abgasreinigungssystem.

Die oben angeführten Verfahren sind daher mit hohem prozesstechnischen Aufwand und relativ geringen Umsatzraten verbunden, so dass diese für die vorliegende Lackdrahtanlage 1 nicht bzw. nur eingeschränkt geeignet sind.

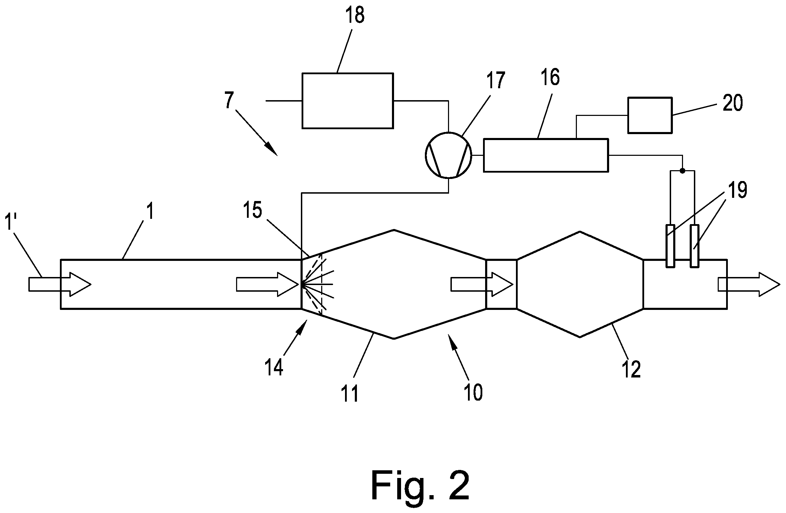

Demgegenüber weist die Abgasreinigungsvorrichtung 7 der Vorrichtung 1, wie aus Fig. 2 ersichtlich, eine Anlage 10 zur selektiven katalytischen Reduktion von Stickoxiden in den Abgasen 1' des Ofens 4 auf. Die Anlage 10 zur katalytischen selektiven Reduktion weist zumindest einen Entstickungskatalysator 11 mit einem katalytisch wirksamen Metalloxid, insbesondere Titandioxid und/oder Wolframtrioxid und/oder Vanadiumpentoxid, auf. Darüber hinaus weist die Abgasreinigungsvorrichtung 7 in Strömungsrichtung der Abgase nach dem zumindest einen Entstickungskatalysator 11 einen Oxidationskatalysator 12 auf, welcher eine Platin-Palladium-Beschichtung als katalytisch wirksames Material aufweist.

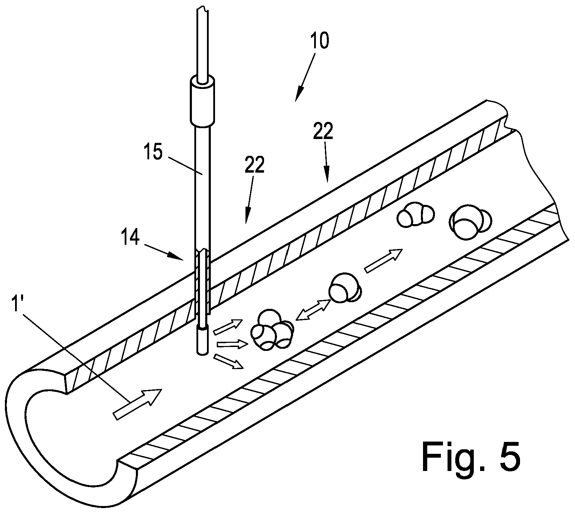

Wie aus Fig. 2 weiters ersichtlich, ist eine Zufuhreinrichtung 14 zum Zuführen eines Reduktionsmittels, insbesondere einer Harnstofflösung, in die Abgase 1' des Ofens 4 vorgesehen (vgl. Fig. 5). Die Zufuhreinrichtung 14 weist eine Zerstäubungsdüse 15 zum Einsprühen des Reduktionsmittels in den Abgasstrom 1' des Ofens 4 auf. Die Zufuhreinrichtung 14 ist mit einer Steuer- bzw. Regeleinrichtung 16 verbunden, um mittels einer Dosierpumpe 17 die Menge des in die Abgase 1' des Ofens 4 eingebrachten Reduktionsmittels einzustellen. Die Dosierpumpe 17 ist mit einem Tank 18 für das Reduktionsmittel verbunden.

Wie aus Fig. 2 weiters ersichtlich, ist zudem ein Sensor 19 zur Messung des Gehalts von Stickoxiden in den Abgasen 1' vorgesehen, wobei gemäß Fig. 2 zwei Sensoren 19 in Strömungsrichtung der Abgase 1' gesehen nach der Anlage 10 zur selektiven katalytischen Reduktion bzw. nach dem Oxidationskatalysator 12 vorgesehen sind. Der Sensor 19 zur Messung des Gehalts von Stickoxiden ist mit der Regeleinrichtung 16 zum Regeln des in die Abgase 1' des Ofens 4 eingebrachten Reduktionsmittels verbunden. Als Regelgrößen für die Eindüsung des Reduktionsmittels über die Zufuhreinrichtung 14 kann die NOx-Konzentration der Abgase 1', insbesondere auch die NOx-Konzentration vor der Zufuhr des Reduktionsmittels, welche mit einer weiteren (nicht gezeigten) NOx-Sonde gemessen werden kann, und/oder die Abgastemperatur und/oder ein dem Abluftdurchsatz proportionales Signal (Drehzahl, Druck, ...) verwendet werden. Die Regeleinrichtung 16 zum Regeln des in die Abgase 1' des Ofens 4 eingebrachten Reduktionsmittels ist mit einer Steuerung 20 für die anderen Anlagenkomponenten, d.h. insbesondere für die Auftragsvorrichtung 3 und für den Ofen 4, verbunden.

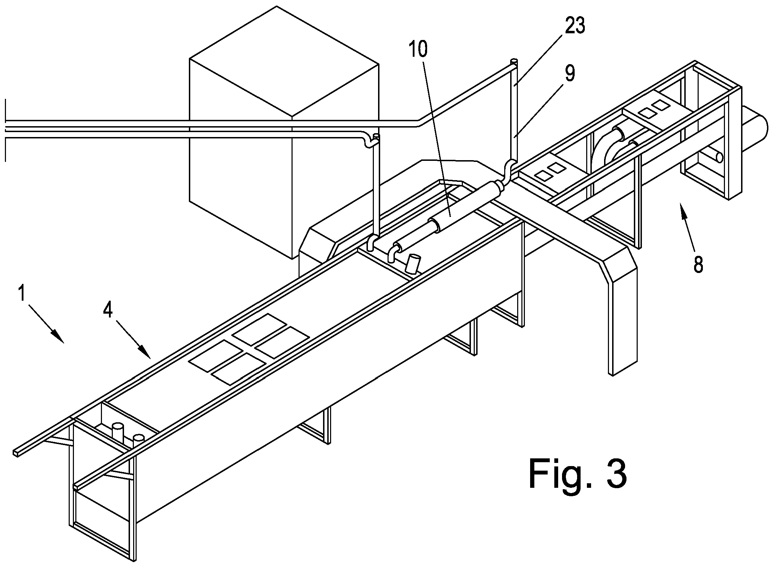

In den Fig. 3 bis 6 ist eine bevorzugte Ausgestaltung der Vorrichtung 1 mit der SCR-Anlage 10 gezeigt.

Wie aus Fig. 3 ersichtlich, weist die Anlage 10 zur selektiven katalytischen Reduktion ein rohrförmiges Gehäuse 22 auf, welches in einer horizontalen Ebene oberhalb des Ofens 4 angeordnet ist.

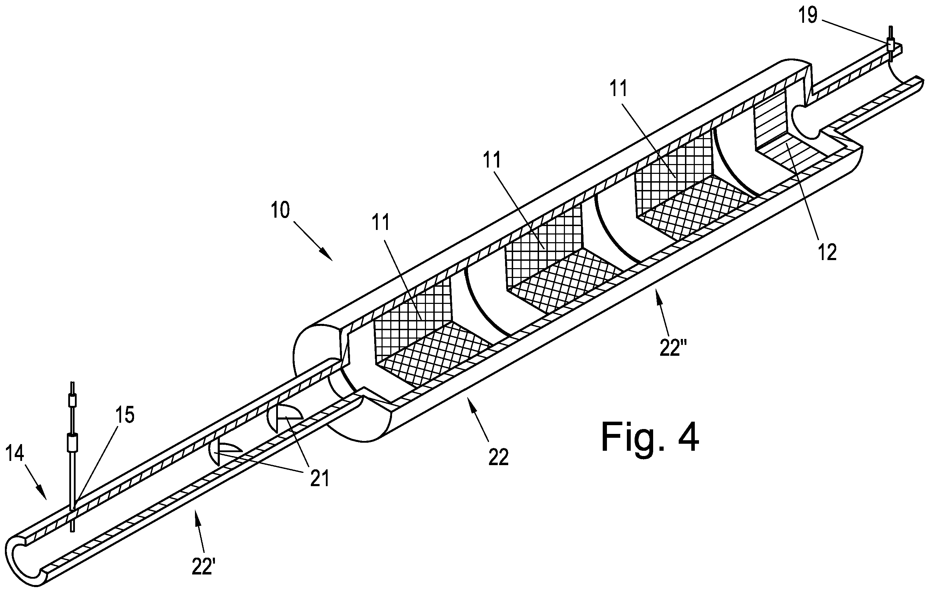

Wie aus Fig. 4 ersichtlich, weist die Anlage 10 zur selektiven katalytischen Reduktion in der gezeigten Ausführung genau drei zylinderförmige Entstickungskatalysatoren 11 in Strömungsrichtung der Abgase hintereinander auf. Es können jedoch auch genau vier solche Entstickungskatalysatoren 11 vorgesehen sein. Darüber hinaus ist genau ein zylinderförmiger Oxidationskatalysator 12 in Strömungsrichtung der Abgase 1' nach den Entstickungskatalysatoren 11 vorgesehen. Bei dieser Ausführung kann auf einen Voroxidationskatalysator verzichtet werden, da sich in der Praxis gezeigt hat, dass das Verhältnis zwischen NO und NO₂ von 85% zu 15% ausreichend für einen schnellen Reaktionsablauf ist. In der gezeigten Ausführung sind drei SCR-Katalysator-Waben 11 aus Keramik mit Vanadiumpentoxid-Wolframtrioxid-Titandioxid-Beschichtung zur NOx-Reduktion und eine Oxidationskatalysator-Wabe 12 mit Platin- und/oder Palladium-Beschichtung zur Oxidation von CO und HC vorgesehen.

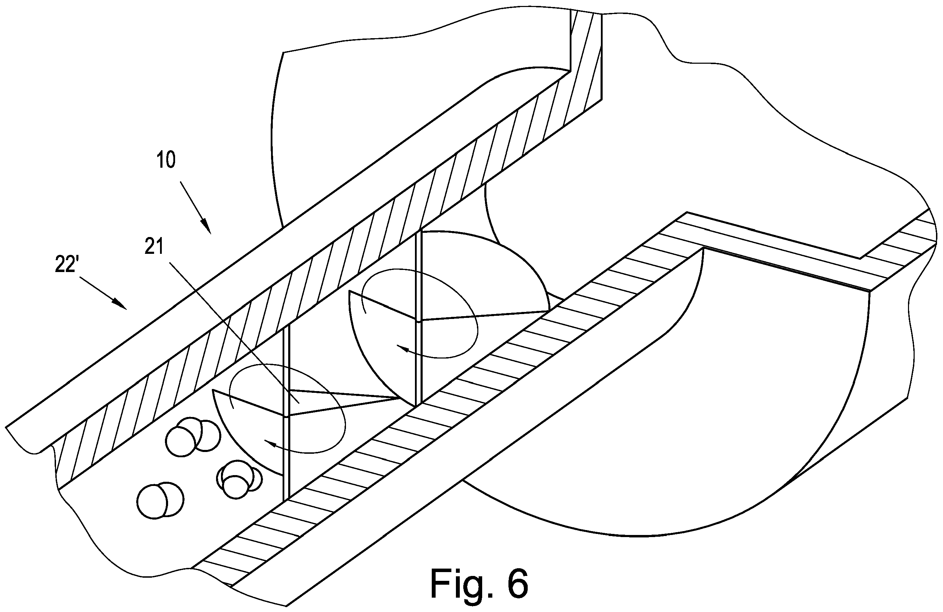

Wie aus Fig. 4 weiters ersichtlich, weist die Abgasreinigungsvorrichtung 7 in Strömungsrichtung der Abgase 1' vor den Entstickungskatalysatoren 11 eine Mischeinrichtung 21 auf (vgl. Fig. 6), mit welcher das Reduktionsmittel aus der Zufuhreinrichtung 14 mit den Abgasen 1' aus dem Ofen 4 vermischt wird. In der gezeigten Ausführung weist die Mischeinrichtung 21 in Strömungsrichtung der Abgase 1' hintereinander zwei stationäre Drallerzeugungselemente auf, welche eine Umlenkung des Abgasstroms bewirken.

Wie aus Fig. 4 weiters ersichtlich, ist die Mischeinrichtung 21 in einem ersten Abschnitt 22' des rohrförmigen Gehäuses 22 mit einem vergleichsweise kleinen Durchmesser angeordnet, wobei die Entstickungskatalysatoren 11 und der Oxidationskatalysator 12 in einem zweiten Abschnitt 22' des rohrförmigen Gehäuses 22 mit einem vergleichsweise großen Durchmesser vorgesehen sind.

Bei der gezeigten Drahtlackvorrichtung 1 wird demnach zum Abbau des NOx das sogenannte SCR-Verfahren (selektive katalytische Reduktion) vorgesehen, welches bisher lediglich in abliegenden Gebieten, beispielsweise bei Kraftfahrzeugen, verwendet wurde, bei denen sich die Abgasströme grundlegend von den gattungsgemäßen Drahtlackiervorrichtungen unterscheiden.

In der gezeigten Ausführung werden im Abgasstrom 1' verschiedene Katalysatoren in Serie geschalten. Als erster Katalysator kann in einer Auführung ein Voroxidationskatalysator vorgesehen sein, welcher zur Umsetzung von CO zu CO₂, von HC zu CO₂ und H₂O und NO zu NO₂ dient. Die Voroxidation von NO dient zur Gleichverteilung von NO und NO₂ im Abgas, welche für eine effiziente Reduktion von NOx im nachfolgenden SCR-Katalysator 11 förderlich ist. Gemäß dem Anlagenschema der Fig. 2 ist kein solcher Voroxidationskatalysator vorgesehen. Dieser nachfolgende SCR-Katalysator 11 ist mit Katalysatorstoffen wie z.B. Titanoxid oder Wolframdioxid zur Verstärkung der Reaktionskinetik bei der Reduktion von NOx beschichtet.

Zum chemischen Abbau von NOx muss dem mit NOx beladenen Luftstrom gasförmiges Ammoniak NH₃ als Reduktionsmittel beigemengt werden. Zur sicheren Handhabung dieses reaktiven Stoffes wird das NH₃ mittels thermischer Zerfallsreaktion aus Harnstoff erzeugt. Dazu wird eine meist 32,5%-ige wässrige Harnstofflösung (NH₂)₂CO - auch bekannt als "AdBlue" aus der Fahrzeugindustrie - aus einem Tank 18 entnommen und mittels der Düse 15 in den heißen Abgasstrom 1' des SCR-Katalysators homogen verteilt eingesprüht. Der instabile Harnstoff wird dabei zunächst im SCR-Katalysator 11 zu Ammoniak NH₃ und Kohlenstoffdioxid CO₂ hydrolysiert:

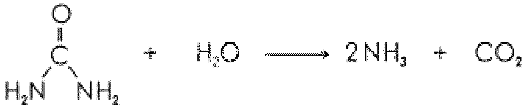

Das Ammoniak (NH₃) reagiert bevorzugt mit dem Sauerstoff (O₂) aus den Stickstoffoxiden (NOx, d.h. NO bzw. NO₂), auch wenn das Abgas 1' reichlich elementaren Sauerstoff enthält. Eine spezielle Form der Redoxreaktion (Komproportionierung) zwischen NOx und NH₃ splittet NOx zu elementarem Stickstoff N₂ und zu Wasserdampf H₂O ab. NOx wird damit vollständig abgebaut:

4NO + 4NH₃ + O₂ → 4N₂ + 6H₂O

NO + NO₂ + 2NH₃ → 2N₂ + 3H₂O

6NO₂ + 8NH₃ → 7N₂ + 12H₂O

Das zulässige Temperaturfenster zur geforderten NOx-Umsetzung liegt im Bereich zwischen 200 und 600°C, welches im Abgas 1' von Lackdrahtöfen 4 auch vorliegt. Zur optimalen Umsetzung von NOx im SCR-Katalysator 11 sollte die Zudosierung von NH₃ entsprechend den stöchiometrischen Verhältnissen der Komponenten in den Reaktionsgleichungen erfolgen. Zu geringe Mengen an Ammoniak verhindern den kompletten Umsatz an NOx und führen zu verbleibendem NOx im Abgas. Zu hohe Mengen an Ammoniak (Ammoniakschlupf) führen zu verbleibendem NH₃ im Abgas und damit zu Geruchsbelästigung. Um einen möglichen Ammoniakschlupf in die Umgebung zu unterbinden, ist am Ende des Abgasreinigungsmoduls ein Oxidationskatalysator 12 nachgeschalten. Dieser oxidiert schlussendlich überschüssiges NH₃ zu N₂ und H₂O. Das SCR-Verfahren ermöglicht eine NOx-Reduktion um mehr als 95%.

Durch Erfassung umfangreicher Messdaten für Schadstoff-Konzentrationen, Abluftmassenströme, Temperaturfenster und angestrebte Reingaswerte wurde die SCR-Anlage 10 speziell für die Lackdrahtmaschine 1 adaptiert und entwickelt. Die Anlage 10 kann grundsätzlich sowohl in vertikaler Richtung als auch in horizontaler Richtung positioniert werden und ist vorteilhafterweise nicht nur in Neuanlagen einsetzbar, sondern kann auch für Altanlagen nachgerüstet werden.

## Patentansprüche

1. Vorrichtung (1) zur Herstellung von Lackdrähten (2), mit einer Auftragsvorrichtung (3) zum Auftragen zumindest einer Lackschicht, einem Ofen (4) zum Verfestigen der Lackschicht und mit einer Abgasreinigungsvorrichtung (7) zum Entfernen von Schadstoffen aus Abgasen (1') des Ofens (4), **dadurch gekennzeichnet, dass** die Abgasreinigungs-vorrichtung (7) eine Anlage (10) zur selektiven katalytischen Reduktion von Stickoxiden (NOx) in den Abgasen (1') des Ofens (4) aufweist.

2. Vorrichtung (1) nach Anspruch 1, **dadurch gekennzeichnet, dass** die Anlage (10) zur katalytischen selektiven Reduktion zumindest einen Entstickungskatalysator (11) mit einem katalytisch wirksamen Metalloxid, insbesondere Titandioxid und/oder Wolframtrioxid und/oder Vanadiumpentoxid, aufweist, wobei bevorzugt zumindest zwei, insbesondere genau drei, Entstickungskatalysatoren (11) in Strömungsrichtung der Abgase (1') hintereinander vorgesehen sind.

3. Vorrichtung (1) nach Anspruch 1 oder 2, **dadurch gekennzeichnet, dass** die Abgasreinigungsvorrichtung (7), insbesondere in Strömungsrichtung der Abgase (1') nach dem zumindest einen Entstickungskatalysator (11), einen Oxidationskatalysator (12) zum Abbau von Kohlenmonoxid und/oder Kohlenwasserstoffen und/oder Ammoniak aufweist, welcher vorzugsweise eine Platin- und/oder Palladium-Beschichtung als katalytisch wirksames Material aufweist.

4. Vorrichtung (1) nach einem der Ansprüche 1 bis 3, **dadurch gekennzeichnet, dass** eine Zufuhreinrichtung (14) zum Zuführen eines Reduktionsmittels, insbesondere von Ammoniak oder einer Ammoniak abgebenden Verbindung, vorzugsweise Harnstofflösung, in die Abgase (1') des Ofens (4) vorgesehen ist, wobei die Zufuhreinrichtung (14) bevorzugt eine Zerstäubungsdüse (15) zum Einsprühen des Reduktionsmittels, insbesondere in Form der Harnstofflösung, in den Abgasstrom (1') des Ofens (4) aufweist.

5. Vorrichtung (1) nach Anspruch 4, **dadurch gekennzeichnet, dass** die Zufuhreinrichtung (14) mit einer Steuer- bzw. Regeleinrichtung (16) zum Steuern bzw. Regeln des in die Abgase (1') des Ofens (4) eingebrachten Reduktionsmittels, insbesondere in Form der Harnstofflösung, verbunden ist.

6. Vorrichtung (1) nach einem der Ansprüche 1 bis 5, **dadurch gekennzeichnet, dass** ein Sensor (19) zur Messung des Gehalts von Stickoxiden in den Abgasen (1') vorgesehen ist, wobei der Sensor (19) zur Messung des Gehalts von Stickoxiden bevorzugt in Strömungsrichtung der Abgase (1') gesehen nach der Anlage (10) zur selektiven katalytischen Reduktion vorgesehen ist.

7. Vorrichtung (1) nach Anspruch 6, **dadurch gekennzeichnet, dass** der Sensor (19) zur Messung des Gehalts von Stickoxiden mit der Regeleinrichtung (16) zum Regeln des in die Abgase (1') des Ofens (4) eingebrachten Reduktionsmittels, insbesondere in Form der Harnstofflösung, verbunden ist.

8. Vorrichtung (1) nach Anspruch 7, **dadurch gekennzeichnet, dass** die Regeleinrichtung (16) zum Regeln des in die Abgase (1') des Ofens (4) eingebrachten Reduktionsmittels mit einer Steuerung (20) für die Auftragsvorrichtung (3) zum Auftragen der Lackschicht und für den Ofen (4) verbunden ist.

9. Vorrichtung (1) nach einem der Ansprüche 1 bis 8, **dadurch gekennzeichnet, dass** die Anlage (10) zur selektiven katalytischen Reduktion eine Mischeinrichtung (21) zum Vermischen des Reduktionsmittels mit den Abgasen (1') aus dem Ofen (4) aufweist, wobei die Mischeinrichtung (21) insbesondere ein vorzugsweise stationäres Drallerzeugungselement aufweist.

10. Vorrichtung (1) nach einem der Ansprüche 1 bis 9, **dadurch gekennzeichnet, dass** die Anlage (10) zur selektiven katalytischen Reduktion ein rohrförmiges Gehäuse (22) aufweist, welches bevorzugt horizontal, insbesondere oberhalb des Ofens (4), angeordnet ist.

11. Vorrichtung (1) nach Anspruch 10, **dadurch gekennzeichnet, dass** die Mischeinrichtung (21) in einem ersten Abschnitt (22') des rohrförmigen Gehäuses (22) mit einem vergleichsweise kleinen Durchmesser und der zumindest eine Entstickungskatalysator (11) in einem zweiten Abschnitt (22") des rohrförmigen Gehäuses (22) mit einem vergleichsweise großen Durchmesser vorgesehen ist.

12. Vorrichtung (1) nach Anspruch 10 oder 11, **dadurch gekennzeichnet, dass** in dem rohrförmigen Gehäuse (22) der Anlage (10) zur selektiven katalytischen Reduktion zumindest ein zylinderförmiger Entstickungskatalysator (11) und/oder ein zylinderförmiger Oxidationskatalysator (12) vorgesehen ist.

13. Verfahren zur Herstellung von Lackdrähten, wobei auf einen Metalldraht zumindest eine Lackschicht aufgetragen wird, welche in einem Ofen (4) verfestigt wird, wobei die Abgase (1') aus dem Ofen (4) von Schadstoffen befreit werden, **dadurch gekennzeichnet, dass** die Abgase (1') aus dem Ofen (4) einer selektiven katalytischen Reduktion von Stickoxiden (NOx) unterzogen werden.

14. Verfahren nach Anspruch 13, **dadurch gekennzeichnet, dass** die Abgase (1') mit einer Temperatur zwischen 200 und 600° Celsius, insbesondere zwischen 250 und 600° Celsius, vorzugsweise zwischen 250 und 480° Celsius, aus dem Ofen (4) abgeleitet und danach der selektiven katalytischen Reduktion unterzogen werden.

15. Verfahren nach Anspruch 13 oder 14, **dadurch gekennzeichnet, dass** die aus dem Ofen (4) abgeleiteten Abgase (1') ohne vorherige Erwärmung der selektiven katalytischen Reduktion unterzogen werden.

## Claims

1. Device (1) for producing enamelled wires (2), with an application device (3) for applying at least one layer of enamel, a furnace (4) for hardening the enamel layer, and with an exhaust gas cleaning device (7) for removing pollutants from exhaust gases (1') of the furnace (4), **characterised in that** the exhaust gas cleaning device (7) comprises an apparatus (10) for the selective catalytic reduction of nitrogen oxides (NOx) in the exhaust gases (1') of the furnace (4).

2. Device (1) according to claim 1, **characterised in that** the apparatus (10) for catalytic selective reduction comprises at least one denitrification catalyst (11) with a catalytically active metal oxide, particularly titanium dioxide and/or tungsten trioxide and/or vanadium pentoxide, wherein preferably at least two, in particular precisely three, denitrification catalysts (11) are provided one after the other in the direction of flow of the exhaust gases (1').

3. Device (1) according to claim 1 or 2, **characterised in that** the exhaust gas cleaning device (7) comprises an oxidation catalyst (12), preferably comprising a platinum and/or palladium coating as a catalytically active material, for reducing carbon monoxide and/or hydrocarbons and/or ammonia, positioned in particular after the at least one denitrification catalyst (11) in the direction of flow of the exhaust gases (1').

4. Device (1) according to any one of claims 1 to 3, **characterised in that** a supply means (14) is provided for supplying a reducing agent, particularly ammonia or an ammoniadonating compound, preferably urea solution, into the exhaust gases (1') of the furnace (4), wherein the supply means (14) preferably comprises an atomising nozzle (15) for spraying the reducing agent, particularly in the form of the urea solution into the exhaust gas stream (1') of the furnace (4).

5. Device (1) according to claim 4, **characterised in that** the supply means (14) is connected to a control and/or regulating device (16) for controlling and/or regulating the reducing agent, particularly in the form of urea solution, which is introduced into the exhaust gases (1') of the furnace (4).

6. Device (1) according to any one of claims 1 to 5, **characterised in that** a sensor (19) is provided for measuring the content of nitrogen oxides in the exhaust gases (1'), wherein the sensor (19) for measuring the content of nitrogen oxides is provided for selective catalytic reduction preferably after the apparatus (10) when viewed in the direction of flow of the exhaust (1') gases.

7. Device (1) according to claim 6, **characterised in that** the sensor (19) for measuring the content of nitrogen oxides is connected to the regulating device (16) for regulating the reducing agent, particularly in the form of urea solution, which is introduced into the exhaust gases (1') of the furnace (4).

8. Device (1) according to claim 7, **characterised in that** the regulating device (16) for regulating the reducing agent which is introduced into the exhaust gases (1') of the furnace (4) is connected to a controller (20) for the application device (3) for applying the enamel layer and for the furnace (4).

9. Device (1) according to any one of claims 1 to 8, **characterised in that** the apparatus (10) for selective catalytic reduction comprises a mixing device (21) for mixing the reducing agent with the exhaust gases (1') from the furnace (4), wherein the mixing device (21) in particular comprises a preferably stationary swirl generating element.

10. Device (1) according to any one of claims 1 to 9, **characterised in that** the apparatus (10) for selective catalytic reduction comprises a tubular housing (22), which is arranged preferably horizontally, particularly above the furnace (4).

11. Device (1) according to claim 10, **characterised in that** the mixing device (21) is provided in a first section (22') of the tubular housing (22) and has a comparatively small diameter, and the at least one denitrification catalyst (11) is provided in a second section (22") of the tubular housing (22) and has a comparatively large diameter.

12. Device (1) according to claim 10 or 11, **characterised in that** at least one cylindrical denitrification catalyst (11) and/or one cylindrical oxidation catalyst (12) is provided in the tubular housing (22) of the apparatus (10) for selective catalytic reduction.

13. Method for producing enamelled wires, wherein at least one enamel layer is applied to a metal wire and is hardened in a furnace (4), wherein the exhaust gases (1') from the furnace (4) are freed from pollutants, **characterised in that** the exhaust gases (1') from the furnace (4) undergo a selective catalytic reduction of nitrogen oxides (NOx).

14. Method according to claim 13, **characterised in that** the exhaust gases (1') are drawn from the furnace (4) at a temperature between 200 and 600 °C, particularly between 250 and 600 °C, preferably between 250 and 480 °C, and thereafter undergo selective catalytic reduction.

15. Method according to claim 13 or 14, **characterised in that** the exhaust gases (1') drawn from the furnace (4) undergo selective catalytic reduction without prior heating.

## Revendications

1. Dispositif (1) destiné à la fabrication de fils émaillés (2), comportant un dispositif d'application (3) pour l'application d'au moins une couche de vernis, un four (4) pour la solidification de la couche de vernis et comportant un dispositif d'épuration de gaz (7) pour l'élimination de substances nocives des gaz rejetés (1') du four (4), **caractérisé en ce que** le dispositif d'épuration de gaz (7) comporte un organe (10) destiné à la réduction catalytique sélective d'oxydes d'azotes (NOx) dans les gaz rejetés (1') du four (4).

2. Dispositif (1) selon la revendication 1, **caractérisé en ce que** l'organe (10) destiné à la réduction catalytique sélective comporte au moins un catalyseur de dénitrification (11) comportant un oxyde métallique à activité catalytique, en particulier du dioxyde de titane et/ou du trioxyde de tungstène et/ou du pentoxyde de vanadium, de préférence au moins deux, en particulier exactement trois, catalyseurs de dénitrification (11) étant prévus successivement dans le sens dans le sens de la circulation des gaz rejetés (1').

3. Dispositif (1) selon la revendication 1 ou 2, **caractérisé en ce que** le dispositif d'épuration des gaz rejetés (7), comporte en particulier dans le sens de la circulation des gaz rejetés (1') après ledit au moins un catalyseur de dénitrification (11), un catalyseur d'oxydation (12) destiné à la dégradation du monoxyde de carbone et/ou d'hydrocarbures et/ou d'ammoniac, qui comporte de préférence un revêtement de platine et/ou de palladium en tant que matériau catalytiquement actif.

4. Dispositif (1) selon l'une quelconque des revendications 1 à 3, **caractérisé en ce qu'**est prévu un système d'alimentation (14) pour l'introduction d'un réducteur, en particulier d'ammoniac ou d'un composé libérant de l'ammoniac, de préférence une solution d'urée, dans les gaz rejetés (1') du four, le système d'alimentation (14) comportant de préférence une buse de pulvérisation (15) conçue pour la pulvérisation du réducteur, en particulier sous forme de la solution d'urée, dans le courant de gaz rejetés (1') du four (4).

5. Dispositif (1) selon la revendication 4, **caractérisé en ce que** le système d'alimentation (14) est relié à un dispositif de commande ou de régulation (16) destiné à la commande ou la régulation du réducteur introduit dans les gaz rejetés (1') du four (4), en particulier sous forme de la solution d'urée.

6. Dispositif (1) selon l'une quelconque des revendications 1 à 5, **caractérisé en ce qu'**un capteur (19) est prévu pour la mesure de la teneur en oxydes d'azote des gaz rejetés (1'), le capteur (19) pour la mesure de la teneur en oxydes d'azote étant prévu de préférence, dans le sens de la circulation des gaz rejetés (1'), après l'organe (10) destiné à la réduction catalytique sélective.

7. Dispositif (1) selon la revendication 6, **caractérisé en ce que** le capteur (19) pour la mesure de la teneur en oxydes d'azote est relié au dispositif de régulation (16) destiné à la régulation du réducteur introduit dans les gaz rejetés (1') du four (4), en particulier sous forme de la solution d'urée.

8. Dispositif (1) selon la revendication 7, **caractérisé en ce que** le dispositif de régulation (16) destiné à la régulation du réducteur introduit dans les gaz rejetés (1') du four (4) est relié à une commande (20) pour le dispositif d'application (3) destiné à l'application de la couche de vernis et pour le four (4).

9. Dispositif (1) selon l'une quelconque des revendications 1 à 8, **caractérisé en ce que** l'organe (10) destiné à la réduction catalytique sélective comporte un système de mélange (21) conçu pour le mélange du réducteur avec les gaz rejetés (1') sortant du four (4), le système de mélange (21) comportant en particulier un élément générateur de tourbillons de préférence stationnaire.

10. Dispositif (1) selon l'une quelconque des revendications 1 à 9, **caractérisé en ce que** l'organe (10) destiné à la réduction catalytique sélective comporte une enceinte tubulaire (22) qui est de préférence disposée horizontalement, en particulier au-dessus du four (4).

11. Dispositif (1) selon la revendication 10, **caractérisé en ce que** le système de mélange (21) est prévu dans un premier segment (22') de l'enceinte tubulaire (22) ayant un relativement faible diamètre et ledit au moins un catalyseur de dénitrification (11) est prévu dans un deuxième segment (22') de l'enceinte tubulaire (22) ayant un relativement grand diamètre.

12. Dispositif (1) selon la revendication 10 ou 11, **caractérisé en ce que** dans l'enceinte tubulaire (22) l'organe (10) destiné à la réduction catalytique sélective est au moins un catalyseur de dénitrification (11) de forme cylindrique et/ou un catalyseur d'oxydation (12) de forme cylindrique.

13. Procédé pour la fabrication de fils émaillés, dans lequel on applique sur un fil métallique au moins une couche de vernis, qui est solidifiée dans un four (4), les gaz rejetés (1') sortant du four (4) étant libérés de substances nocives, **caractérisé en ce que** les gaz rejetés (1') sortant du four (4) sont soumis à une réduction catalytique sélective des oxydes d'azote (Nox).

14. Procédé selon la revendication 13, **caractérisé en ce que** les gaz rejetés (1') sont évacués du four (4) à une température comprise entre 200 et 600° Celsius, en particulier, entre 250 et 600° Celsius, de préférence entre 250 et 480° Celsius et ensuite soumis à la réduction catalytique sélective.

15. Procédé selon la revendication 13 ou 14, **caractérisé en ce que** les gaz rejetés (1') évacués du four (4) sont soumis à la réduction catalytique sélective sans chauffage préalable.
